**Europäisches Patentamt**

**European Patent Office**

**Office européen des brevets**

(19)

(11) Veröffentlichungsnummer : **0 514 325 A2**

(12) # EUROPÄISCHE PATENTANMELDUNG

(21) Anmeldenummer : **92810308.4**

(22) Anmeldetag : **28.04.92**

(51) Int. Cl.$^5$ : **C21D 9/00, C21D 1/53**

(30) Priorität : **17.05.91 DE 4116215**

(43) Veröffentlichungstag der Anmeldung : **19.11.92 Patentblatt 92/47**

(84) Benannte Vertragsstaaten : **DE FR GB SE**

(71) Anmelder : **HILTI Aktiengesellschaft FL-9494 Schaan (LI)**

(72) Erfinder : **Droessler, Eckart Kastner Strasse 140 A-6712 Thüringen (AT)** Erfinder : **Batliner, Rainer Heiligwies 91 FL-9491 Schaanwald (LI)**

(74) Vertreter : **Wildi, Roland Hilti Aktiengesellschaft Patentabteilung FL-9494 Schaan (LI)**

(54) **Trommelförmige Transporteinrichtung.**

(57) Die trommelförmige Transporteinrichtung (6) für Werkstücke, einsetzbar in einem Wirbelbett (10), weist zwei voneinander unabhängige, mit unterschiedlichen Drehzahlen drehende Trommeln (8, 9) auf. Der Mantel (8c, 9c,),beider Trommeln (8, 9) ist perforiert. Die am inneren Umfang der Trommeln (8, 9) angeordneten Wendeln (8b, 9b) weisen eine gegenläufige Steigung gegenüber der am äusseren Umfang der Trommel (9) angeordneten Wendel (9a) auf. Der Antrieb beider Trommeln (8, 9) erfolgt über zwei voneinander getrennte Motoren, deren Drehzahlen stufenlos regelbar sein können.

Fig. 2

EP 0 514 325 A2

Die Erfindung betrifft eine trommelförmige Transporteinrichtung für Werkstücke in einem Wirbelbett mit einem perforierten Mantel, einem aufnahmeseitigen Teil und einem abgabeseitigen Teil sowie einer innen und einer aussen am Mantel angeordneten Wendel, wobei die beiden Wendeln eine gegenläufige Steigung besitzen.

Es gibt verschiedene Anwendungsbereiche, bei denen Werkstücke aus Metall in einem Wirbelbett behandelt werden. Verbreitete Behandlungen bei solchen Werkstücken sind Beschichtungen und Wärmebehandlungen in Form eines Aufwärm-bzw. Abschreckvorganges.

Es ist bekannt, dass dem Transport der Werkstücke dienende Einbauten in einem Wirbelbett die Fluidisierung und damit auch den Wärmeübergangskoeffizienten zwischen den zu behandelnden Werkstücken und der Wirbelschicht beim Aufheizen bzw. beim Abkühlen negativ beeinflussen. Bei solchen Einbauten handelt es sich in der Regel um Gestelle oder Führungsschienen. Die negative Beeinflussung erfolgt durch Strömungsschatten oder örtliche Entmischung von Gas und Pulver rund um die Einbauten.

Mit dieser Art der Einbauten im Wirbelbett ist eine Behandlung von Schüttgütern ohne deutlichen Verlust an Abkühl-oder Aufheizgeschwindigkeit, bedingt durch Strömungsschatten verschiedener Transport- oder Haltevorrichtungen, nicht möglich.

Innerhalb der bereits erwähnten Anwendungsbereiche ist eine trommelförmige Transporteinrichtung in Verbindung mit einem Wirbelbett aus Aluminiumoxyd in einer Retorte bekannt.

Aus dieser Anwendung ist bekannt, dass eine Verbesserung der Kühlleistung im Wirbelbett mit Erhöhung der Verwirbelung des Pulvers erreicht wird. Bei der Verwendung einer trommelförmigen Transporteinrichtung kann dies durch eine höhere Drehzahl erreicht werden.

Bei der Wärmebehandlung ist aber nicht nur die Abschreckgeschwindigkeit, sondern auch die Aufenthaltszeit der zu behandelnden Werkstücke im Wirbelbett entscheidend. Diese Aufenthaltszeit wird durch eine entsprechende Reduzierung der Drehzahl erreicht.

Bezogen auf die Drehzahl der trommelförmigen Transporteinrichtung ergeben sich dadurch gegensätzliche Ziele. Zur Verbesserung der Kühlleistung soll die Drehzahl möglichst hoch und zur Erhöhung der Aufenthaltszeit möglichst klein sein. Bei einer erhöhten Drehzahl wird die Durchlaufgeschwindigkeit ebenfalls erhöht, bei konstanter Aufenthaltszeit müsste daher die trommelförmige Transporteinrichtung länger werden.

Die bekannte trommelförmige Transporteinrichtung ist somit nicht in der Lage, bei einer guten Kühlleistung eine entsprechende Aufenthaltszeit bzw. bei einer entsprechenden Aufenthaltszeit entsprechende Kühlleistung zu gewährleisten.

Der Erfindung liegt die Aufgabe zugrunde, eine trommelförmige Transporteinrichtung zu schaffen, die bei normaler Baulänge eine gute Kühlleistung und eine lange Aufenthaltszeit der Werkstücke im Wirbelbett ermöglicht.

Erfindungsgemäss wird dies dadurch erreicht, dass der aufnahmeseitige Teil und der abgabeseitige Teil als voneinander unabhängige, mit unterschiedlichen Drehzahlen drehende Tromeln ausgebildet sind. Somit kann die jeweilige Aufenthaltszeit in den einzelnen Trommeln über die jeweiligen Drehzahlen einfacher eingestellt werden.

Die erfindungsgemässe Ausbildung ermöglicht es, die sich in den Trommeln befindlichen Werkstücke unterschiedlich schnell zur abgabeseitigen Öffnung der Retorte zu transportieren.

Vorteilhafterweise dreht sich die aufnahmeseitige Trommel schneller als die abgabeseitige Trommel. Durch die höhere Drehzahl der aufnahmeseitigen Trommel entsteht eine den härtungstechnischen Vorteil bildende höhere Reynoldszahl. Die von einer Wärmebehandlungsstation kommenden Werkstücke weisen einen hohen Wärmeinhalt auf. Die in das Wirbelbett fallenden Werkstücke geben ihren Wärmeinhalt während des Beschichtungsvorganges an das fluidisierte Pulver ab. Die Dicke der dabei aufschmelzenden Schicht ist abhängig vom Wärmeinhalt der Werkstücke.

Um den Restwärmeinhalt der Werkstücke nach dem Beschichten so schnell wie möglich abzubauen, kann mit Hilfe der sich schneller drehenden aufnahmeseitigen Trommel ein Auseinanderziehen des Stromes der zu behandelnden Werkstücke erreicht werden. Dadurch hat jedes einzelne Werkstück für seine Wärmeabgabe eine grössere Umgebung zur Verfügung.

Eine Gefügeumwandlung muss bei möglichst konstanten Temperaturen, sowohl zeitlich als auch örtlich erfolgen. Durch die niedrige Drehzahl wird ein Verdichten und damit Kompaktieren des Stromes der sich in der abgabeseitigen Trommel befindlichen Werkstücke erreicht. Dieser Effekt begünstigt die Einhaltung enger Temperatur-Toleranzgrenzen.

Da nach dem eigentlichen Abschreckvorgang der Werkstücke eine längere Aufenthaltszeit im Wirbelbett erwünscht ist, ist die mit niedrigerer Drehzahl angetriebene abgabeseitige Trommel vorzugsweise länger ausgebildet als die aufnahmeseitige Trommel.

Vorteilhafterweise ist der Durchmesser des Aufnahmebereiches der aufnahmeseitigen Trommel grösser als der Durchmesser des abgabeseitigen Bereiches der abgabeseitigen Trommel, was beispielsweise die Zuführung der Werkstücke als Schüttgut erleichtert. Der grosse Durchmesser der aufnahmeseitigen Trommel dient ferner dem Erreichen der für die Abschreckung und Beschichtung massgebenden Eintauchtiefe. Damit in der abgabeseitigen Trommel die Werkstücke wieder enger aneinander zu liegen kommen, ist der Durchmesser der abgabeseitigen Trommel vorzugsweise entsprechend klein.

Zweckmässigerweise weist die innere Wendel der aufnahmeseitigen Trommel die gleiche Steigung auf wie die innere Wendel der abgabeseitigen Trommel. Somit gibt es beim Übergang von der aufnahmeseitigen Trommel zur abgabeseitigen Trommel keine Schnittstellenprobleme. Die Steigung der inneren Wendel entspricht vorzugsweise der Breite oder der Länge eines zu transportierenden Werkstückes.

Vorteilhafterweise ist die gemeinsame Längsachse beider Trommeln gegenüber der horizontalen geneigt angeordnet. Durch diese Anordnung der Trommeln wird das Herausragen der abgabeseitigen Trommel aus dem Wirbelbett erreicht. Das sich innerhalb der Trommel befindliche Pulver gelangt durch den perforierten Mantel der aus dem Wirbelbett herausragenden abgabeseitigen Trommel wieder zurück in das Wirbelbett.

Zweckmässigerweise beträgt der Neigungswinkel der Längsachse beider Trommeln zum aufnahmeseitigen Bereich 10 bis 30 Grad. Aufgrund dieser geringen Neigung kann eine geringe Bauhöhe der Retorte erreicht werden.

Die Erfindung wird anhand eines Ausführungsbeispieles näher erläutert. Es zeigen:

Fig. 1 eine schematische Darstellung einer gesamten Anlage, bestehend aus Härteofen und Abschreckbad in Form eines Wirbelbettes;

Fig. 2 die trommelförmige Transporteinrichtung für das Wirbelbett der Fig. 1.

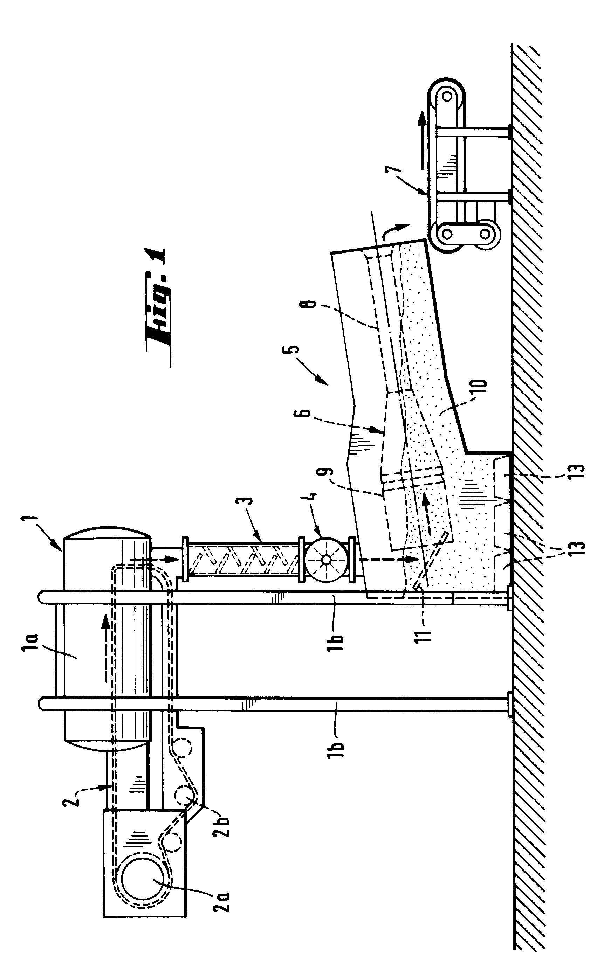

Die Figur 1 zeigt eine Anlage, in der eine Wärmebehandlung von Werkstücken mit anschliessender Beschichtung erfolgt.

Der Aufbau der Anlage ist im wesentlichen stufenförmig. Über ein tragendes Gestell 1b ist der Härteofen 1 mit der Härtekammer 1a in der Höhe angeordnet. Ein Transportband 2, beispielsweise in Form einer bekannten Mehrgliederkette, transportiert die Werkstücke durch den Härteofen 1. Transportband 2 ist mittels Spannrollen 2b gespannt. Der Antrieb erfolgt über die Antriebseinheit 2a.

Die den Härteofen 1 verlassenden Werkstücke haben eine hohe Temperatur, wenn diese in eine Abkühlvorrichtung 3 in Form einer Hohlkammer fallen. In der Abkühlvorrichtung 3 kann der Wärmeinhalt der Werkstücke geregelt werden. Nach dem Verlassen der Abkühlvorrichtung 3 gelangen die Werkstücke in eine Zellradschleuse 4, die ein Abschreckbad in Form eines Wirbelbettes 10 gegenüber dem Härteofen 1 abdichtet. Flüchtige Teile des sich in einer Retorte 5 befindlichen Wirbelbettes 10 könnten sonst in den Härteofen 1 gelangen und diesen beschädigen.

In der Retorte 5 wird mittels einströmendem Gas Pulver in einen fluidisierten Zustand überführt, so dass ein Wirbelbett 10 entsteht. Die vom Härteofen 1 kommenden, durch die Abkühlvorrichtung 3 fallenden, temperierten Werkstücke werden in dem Wirbelbett 10 mit einer dünnen Schicht überzogen. Der Transport der Werkstücke innerhalb des Wirbelbettes 10 erfolgt über eine schräg angeordnete Transporteinrichtung 6, die im Innern eine nicht dargestellte Wendel für den Transport der Werkstücke aufweist. Die über die Transporteinrichtung 6 zur abgabeseitigen Öffnung 5b transportierten Werkstücke verlassen somit wieder die Retorte 5. Der Weitertransport der Werkstücke erfolgt mittels eines Förderbandes 7.

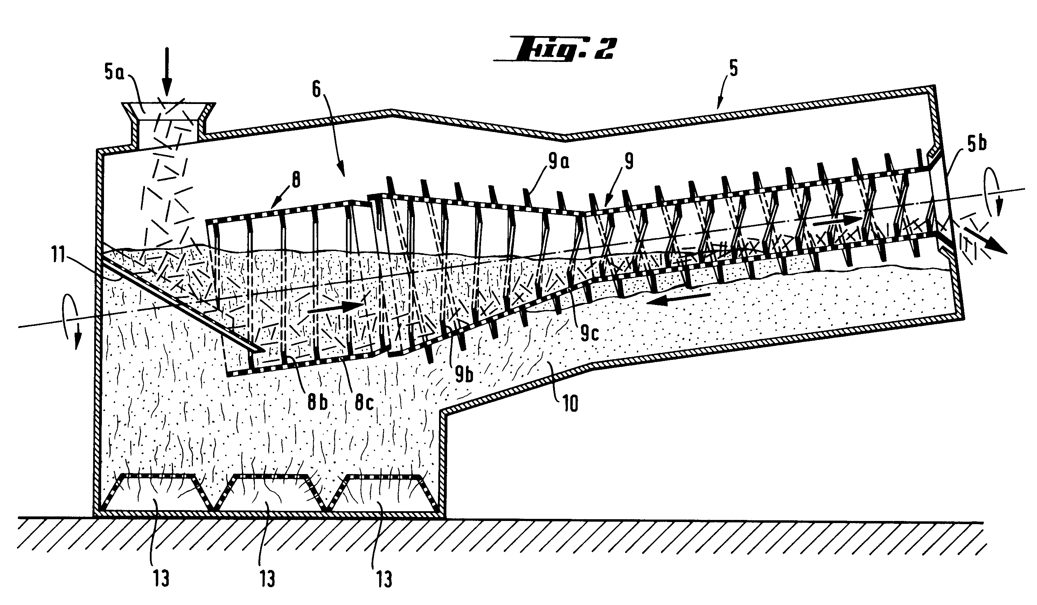

Die in der Figur 2 dargestellte trommelförmige Transporteinrichtung 6 ist innerhalb der Retorte 5 in einem Wirbelbett 10 angeordnet. Die Transporteinrichtung 6 besteht aus einer aufnahmeseitigen Trommel 8 und einer abgabeseitigen Trommel 9, die sich unterschiedlich schnell drehen können, hintereinander liegen und koaxial eingebaut sind. Beide Trommeln 8, 9 weisen eine innenliegende Wendel 8b, 9b zum Transport der Werkstücke und einen perforierten Mantel 8c, 9c auf. Dieser perforierte Mantel 8c, 9c dient einerseits der Aufrechterhaltung der Fluidisierung in der Trommel 8, 9 und andererseits dem Trennen des Pulvers von den Werkstükken.

Das zusammen mit den Werkstücken in die beiden Trommeln 8, 9 gelangende Pulver wird ebenfalls durch die innenliegenden Wendeln 8b, 9b zur abgabeseitigen Öffnung 5b transportiert. Die Transporteinrichtung 6 ist gegenüber der Horizontalen geneigt angeordnet. Die abgabeseitige Trommel 9 ist dabei leicht aufwärts ausgerichtet angeordnet. Der grösste Teil der aufnahmeseitigen Trommel 8 befindet sich im Wirbelbett 10. Die abgabeseitige Trommel 9 ragt mit der abgabeseitigen Öffnung 5b aus dem Wirbelbett 10. Damit sich im Bereich der abgabeseitigen Öffnung 5b kein aus dem perforierten Mantel 8c, 9c entweichendes Pulver anhäuft, ist an der Trommel 9 ausserhalb eine Wendel 9a angeordnet, die das Pulver in den Bereich der aufnahmeseitigen Trommel 8 zurücktransportiert.

Die Fluidisierung des Pulvers wird mittels Gaszuleitungskammern 13, die am tiefsten Punkt der Retorte 5 angeordnet sind, erreicht.

Die durch einen Einlauftrichter 5a in die Retorte 5 gelangenden Werkstücke gelangen entlang eines Schrägbodens 11 in die aufnahmeseitige Trommel 8. Diese Trommel 8 dreht sich schnell, zieht den Strom der Werkstücke auseinander und verbessert die Wärmeübergangsbedingungen.

Anschliessend werden die Teile in die abgabeseitige Trommel 9 übergeben. Diese dreht sich deutlich langsamer und erhöht somit die Aufenthaltszeit der Werkstücke in der Trommel 9.

Durch dichteres Lagern der Werkstücke wird die Wärmekapazität des Stromes erhöht, so dass eine konstante Temperatur leichter eingehalten werden kann. Sollte die Verweilzeit der Werkstücke in der sich langsam drehenden, abgabeseitigen Trommel 9 zu kurz sein, so kann diese mittels eines "stop and go"-Betriebes verlängert werden. Um die Verweilzeit der Werkstücke in den beiden Trommeln 8, 9 steuern zu können, ist es vorteilhaft, wenn die Trommeldrehzahlen variabel einstellbar sind.

Die nicht dargestellten Antriebe der Trommeln 8, 9 sind vorzugsweise beide auf eine Seite gelegt, damit auf der Eintrittsseite möglichst viel freier Raum vorhanden bleibt. Der Antrieb ist so konstruiert, dass bei besonderen Anwendungsfällen die Trommeln gegenläufig angetrieben werden können. Die nicht dargestellte Lagerung der Trommel 8, 9 kann über eine Gabel realisiert werden.

Um eine hohe Flexibilität einer solchen Anlage gewährleisten zu können, ist es vorteilhaft, wenn die beiden Trommeln 8, 9, die nicht dargestellten Trommellager und die Trommelantriebe derart gestaltet sind, dass Trommeln 8, 9 mit anderen Durchmessern, anderen Längen, anderen Steigungen der innenliegenden Wendel 8b, 9b oder anderem perforierten Mantel 8c, 9c verwendet und leicht ausgetauscht werden können.

## Patentansprüche

1. Trommelförmige Transporteinrichtung (6) für Werkstücke in einem Wirbelbett (10) mit einem perforierten Mantel, einem aufnahmeseitigen Teil und einem abgabeseitigen Teil sowie einer innen und einer aussen am Mantel angeordneten Wendel, wobei die beiden Wendeln eine gegenläufige Steigung besitzen, **dadurch gekennzeichnet**, dass der aufnahmeseitige Teil und der abgabeseitige Teil als voneinander unabhängige, mit unterschiedlichen Drehzahlen drehende Trommeln (8, 9) ausgebildet sind.

2. Vorrichtung nach Anspruch 1, dadurch gekennzeichnet, dass sich die aufnahmeseitige Trommel (8) schneller dreht als die abgabeseitige Trommel (9).

3. Vorrichtung nach Anspruch 1 oder 2, dadurch gekennzeichnet, dass die abgabeseitige Trommel (9) länger ist als die aufnahmeseitige Trommel (8).

4. Vorrichtung nach einem der Ansprüche 1 bis 3, dadurch gekennzeichnet, dass der Durchmesser des Aufnahmebereiches der aufnahmeseitigen Trommel (8) grösser ist als der Durchmesser des abgabeseitigen Bereiches der abgabeseitigen Trommel (9).

5. Vorrichtung nach einem der Ansprüche 1 bis 4, dadurch gekennzeichnet, dass die innere Wendel (8b) der aufnahmeseitigen Trommel (8) die gleiche Steigung aufweist wie die innere Wendel (9b) der abgabeseitigen Trommel (9).

6. Vorrichtung nach einem der Ansprüche 1 bis 5, dadurch gekennzeichnet, dass die gemeinsame Längsachse beider Trommeln (8, 9) gegenüber der Horizontalen geneigt angeordnet ist.

7. Vorrichtung nach Anspruch 6, dadurch gekennzeichnet, dass der Neigungswinkel der Längsachse beider Trommeln (8, 9) zum aufnahmeseitigen Bereich hin 5° bis 30° beträgt.

Fig. 1

Fig. 2